# EUROPEAN PATENT APPLICATION

(11) **EP 4 693 278 A1**
(43) Date of publication of application: **11.02.2026**
(21) Application number: 25194712.3
(22) Date of filing: 07.08.2025
(51) Int. Cl.: G10L 15/22, G10L 15/26, G10L 15/06, G10L 15/065, G10L 15/16, H04L 12/18, H04M 3/56, H04N 7/15

(54) **CONTEXTUAL SPEECH RECOGNITION OF VIRTUAL MEETINGS**

(30) Priority: 08.08.2024 US 202418798633
(71) Applicant: Google LLC, Mountain View, CA 94043 (US)
(72) Inventor: COHEN, Tal, 6789141 Tel Aviv (IL)
(74) Representative: Crook, Hugh Alexander

(57) **Abstract**

A method includes receiving audio data of a virtual meeting and identifying, within a plurality of content items related to the virtual meeting, content not previously recognized by a speech recognition system designated to convert the audio data of the virtual meeting into text. The method also includes causing the speech recognition system to be modified based on the previously unrecognized content. The method further includes causing the audio data of the virtual meeting to be converted into the text using the modified speech recognition system, wherein the text comprises at least part of the previously unrecognized content.

## Description

### TECHNICAL FIELD

Aspects and implementations of the present disclosure relate to speech recognition and audio transcription, and in particular to generating text based on audio data from a virtual meeting.

### BACKGROUND

Virtual meeting systems allow individuals to communicate using digital means. Some virtual meeting systems allow individuals to communicate without being in the same physical location. Some virtual meeting systems allow individuals to communicate within the same physical location (e.g., lecture hall, auditorium, etc.). Some virtual meeting systems allow communication using text, audio data, and/or video data. Some virtual meeting systems can provide closed-captions and/or transcription services that use speech recognition to convert spoken conversation into text.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor to delineate any scope of the particular implementations of the disclosure or any scope of the claims. Its sole purpose is to present some concepts of the disclosure in a simplified form as a prelude to the more detailed description that is presented later.

In some implementations, a system and method are disclosed for contextual speech recognition of virtual meetings. In an implementation, a method includes receiving audio data of a virtual meeting. The method further includes identifying, within a plurality of content items related to the virtual meeting, content not previously recognized by a speech recognition system designated to convert the audio data of the virtual meeting into text. The method further includes causing the speech recognition system to be modified based on the previously unrecognized content. The method further includes causing the audio data of the virtual meeting to be converted into the text using the modified speech recognition system, where the text includes at least part of the previously unrecognized content.

In some embodiments, the plurality of content items includes at least one of names of participants of the virtual meeting, documents related to the virtual meeting, text shared between participants of the virtual meeting, or documents associated with an organization of a participant of the virtual meeting.

In some embodiments, an image is shared during the virtual meeting, and the plurality of content items includes text derived from processing the image using optical character recognition.

In some embodiments, causing the speech recognition system to be modified based on the previously unrecognized content includes generating one or more possible pronunciations for the previously unrecognized content and adding the one or more possible pronunciations to a lexicon of the speech recognition system.

In some embodiments, the speech recognition system includes one or more machine learning models trained to convert speech data to corresponding text data. In some embodiments, causing the speech recognition system to be modified based on the previously unrecognized content includes generating one or more possible pronunciations for the previously unrecognized content, generating training data comprising the one or more possible pronunciations as inputs and the previously unrecognized content as target output, and retraining a first machine learning model of the one or more machine learning models using the generated training data.

In some embodiments, causing the speech recognition system to be modified based on the previously unrecognized content includes generating one or more possible pronunciations for the previously unrecognized content, generating training data comprising the one or more possible pronunciations as inputs and the previously unrecognized content as target output, training a new machine learning model using the generated training data to recognize the previously unrecognized content, and adding the new machine learning model to the one or more machine learning models of the speech recognition system.

In some embodiments, causing the speech recognition system to be modified based on the previously unrecognized content includes providing a representation of the previously unrecognized content to at least a first machine learning model of the one or more machine learning models.

In some embodiments, the text from causing the audio data of the virtual meeting to be converted using the modified speech recognition system is at least one of live captions visible during the virtual meeting, a transcription of the virtual meeting, or a summary of the virtual meeting generated using one or more machine learning models.

In some embodiments a computer-readable storage medium (which may be a non-transitory computer-readable storage medium, although the invention is not limited to that) stores instructions which, when executed, cause a processing device to perform operations comprising a method according to any embodiment or aspect described herein.

In some embodiments a system comprises: a memory device; and a processing device operatively coupled with the memory to perform operations comprising a method according to any embodiment or aspect described herein.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
FIG. 1 illustrates an example system for contextual speech recognition of virtual meetings, in accordance with at least one embodiment.
FIG. 2 depicts an example virtual meeting, in accordance with at least one embodiment.
FIG. 3 depicts a flow diagram of an example method for contextual speech recognition of virtual meetings, in accordance with at least one embodiment.
FIG. 4 depicts a flow diagram for modifying a speech recognition system used for contextual speech recognition of virtual meetings, in accordance with at least one embodiment.
FIG. 5 depicts a flow diagram for modifying a speech recognition system used for contextual speech recognition of virtual meetings, in accordance with at least one embodiment.
FIG. 6 is a block diagram illustrating an exemplary computer system, in accordance with at least one embodiment of the present disclosure.

### DETAILED DESCRIPTION

Some virtual meeting systems can provide closed-captions and/or transcription services that use speech recognition to convert spoken conversation into text. For example, bbbbsome systems can convert the speech audio to text during the virtual meeting and present the text as live captions. Some systems can convert the speech audio to text after the virtual meeting to generate a transcript of the virtual meeting. Some systems can convert the speech audio to text and use one or more artificial intelligence (AI) and/or machine learning models to generate a textual summary of the virtual meeting. However, virtual meetings can be technical and include company-specific, organization-specific, or team-specific jargon. The use of jargon can lead to systemic failures of the speech recognition system, which, in turn, can render the generated text (e.g., closed captions, transcript, AI-generated summary, etc.) less useful, or even confusing.

As a non-limiting example, if a participant in a virtual meeting says, "Nandita will look into improving VHEX," where Nandita is the name of a team member and VHEX (pronounced "vee-hex") is an acronym used by the team, the generated text may be incorrect and difficult to understand, such as "None did they will look into improving we hex."

Aspects of the present disclosure address the above and other deficiencies by providing for contextual speech recognition of virtual meetings. A speech recognition system of a virtual meeting system can be modified to correctly transcribe unfamiliar words. For example, the virtual meeting system can identify, within content items associated with the virtual meeting, content (e.g., words, sentences, phrases, etc.) that has not previously been recognized by the speech recognition system ("previously unrecognized content"). In some embodiments, the previously unrecognized content can include content that has been previously recognized incorrectly. For example, the speech recognition system may incorrectly transcribe a person's name as two words since the name has not been seen by the system before (e.g. "previously unrecognized content"). After modifying the speech recognition system, the name can be correctly recognized and converted from speech to text.

The content items associated with the virtual meeting can include names of participants of the virtual meeting and/or text included in documents associated with the meeting (e.g., documents attached to a meeting invitation). In some embodiments, the content items associated with the virtual meeting can include text extracted from content shared/presented during a virtual meeting. For example, a participant can share with other participants a presentation during the virtual meeting (e.g., can share their device screen where they have a presentation open during a video conference meeting). The virtual meeting system can extract text from the images shared by the participant (e.g., frames of the presentation, frames of the participant's device screen, etc.), for example, using optical character recognition (OCR) software.

In some embodiments, the content items associated with the virtual meeting can include text exchanged between one or more participants of the virtual meeting (e.g., in-meeting chat messages).

In some embodiments, the content items associated with the virtual meeting can include text extracted from one or more documents associated with an organization of a participant of the virtual meeting. For example, during a team call, a speech recognition system can be used that has previously been modified to recognize and correctly transcribe speech audio related to content (e.g., company-specific jargon) found in documents of the organization. The modified speech recognition system can be used during multiple virtual meetings of the organization to increase the quality of all text generated from speech audio related to those meetings.

After identifying previously unrecognized content, the virtual meeting system can modify a speech recognition system to more accurately detect and transcribe the previously unrecognized content.

In some embodiments, the speech recognition system includes one or more machine learning models. In some embodiments, modifying the speech recognition system to correctly transcribe the content items identified by the virtual meeting system can include retraining an existing machine learning model included in the speech recognition system to detect the identified content. In some embodiments, modifying the speech recognition system can include training a new machine learning model to detect the identified content and adding the new machine learning model to the speech recognition system. In some embodiments, the previously unrecognized content can be detected in real-time (or near real-time) during the virtual meeting (e.g., by extracting text from an image being shared during the meeting and determining that the text is previously unrecognized content) and the detected previously unrecognized content (or a representation thereof) can be provided as an additional input to the one or more machine learning models of the speech recognition system.

In some embodiments, the modified speech recognition system can be used to convert audio data from the virtual meeting to text to provide live captions during the virtual meeting, to provide a transcription of the virtual meeting, and/or to generate a textual AI summary of the meeting.

In some embodiments, the modified speech recognition system can be used outside of a virtual meeting, such as during transcription of recorded audio or during generation of textual summaries of a digital media (e.g., video, show, podcast, audiobook, etc.).

Advantages of the disclosed embodiments over the existing technology include but are not limited to improved accuracy of text generated from speech audio, resulting in better utilization of computing resources since computing resources will not be used to generate an inaccurate textual representation of the audio data.

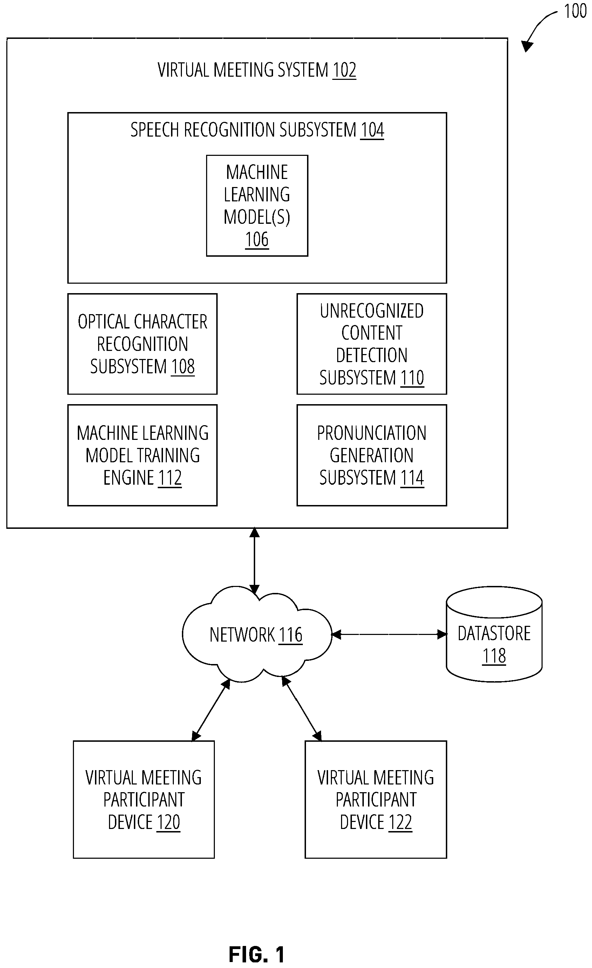

FIG. 1 illustrates an example system 100 for contextual speech recognition of virtual meetings, in accordance with at least one embodiment. System 100 can include virtual meeting system 102, datastore 118, virtual meeting participant device 120, and virtual meeting participant device 122 connected via network 116, such as a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

Virtual meeting system 102 can allow one or more users (e.g., one or more of the virtual meeting participants) to communicate without being physically present. Virtual meeting system 102 can generate one or more textual representations of speech audio transmitted via virtual meeting system 102. In some embodiments, virtual meeting system 102 can include speech recognition subsystem 104, optical character recognition subsystem 108, unrecognized content detection subsystem 110, machine learning model training engine 112, and pronunciation generation subsystem 114.

Speech recognition subsystem 104 can generate a textual representation of audio data from a virtual meeting of virtual meeting system 102. In some embodiments, speech recognition subsystem 104 can include one or more machine learning model(s) 106 and/or AI models capable of converting speech data to text. For example, machine learning model(s) 106 can include one or more machine learning models trained to perform automatic speech recognition (ASR).

In some embodiments, the AI models (e.g., machine learning model(s) 106) can include one or more of decision trees, random forests, support vector machines, or other types of machine learning models. In one embodiment, such AI models may include one or more artificial neural networks (also referred to simply as a neural network). The artificial neural network can include a feature representation component with a classifier or regression layers that map features to a target output space. The artificial neural network may be, for example, a convolutional neural network (CNN) that can include a feature representation component with a classifier or regression layers that map features to a target output space, and can host multiple layers of convolutional filters. Pooling can be performed, and non-linearities may be addressed, at lower layers, on top of which a multilayer perceptron can be commonly appended, mapping top layer features extracted by the convolutional layers to decisions (e.g., classification outputs). The neural network may further be a deep network with multiple hidden layers or a shallow network with zero or a few (e.g., 1-2) hidden layers. Deep learning may use a cascade of multiple layers of nonlinear processing units for feature extraction and transformation. Each successive layer can use the output from the previous layer as input. In deep learning, each level learns to transform its input data into a slightly more abstract and composite representation.

In some embodiments, the AI models may include one or more recurrent neural networks (RNNs). An RNN is a type of neural network that includes a memory to enable the neural network to capture temporal dependencies. An RNN is able to learn input-output mappings that depend on both a current input and past inputs. The RNN can address past and future measurements and make predictions based on this continuous measurement information. One type of RNN that may be used is a long short term memory (LSTM) neural network.

The AI models can include at least one generative AI model, such as a large language model (LLM) allowing for the generation of new and original content. A generative AI model may include aspects of a transformer architecture, or a generative adversarial network (GAN) architecture. Such a generative AI model can use other machine learning models including an encoder-decoder architecture including one or more self-attention mechanisms, and one or more feed-forward mechanisms. In some embodiments, the generative AI model can include an encoder that can encode input textual data into a vector space representation; and a decoder that can reconstruct the data from the vector space, generating outputs with increased novelty and uniqueness. The self-attention mechanism can compute the importance of phrases or words within a text data with respect to all of the text data. A generative AI model can also utilize the previously discussed deep learning techniques, including recurrent neural networks (RNNs), convolutional neural networks (CNNs), or transformer networks. A generative AI model can be pre-trained on a large corpus of data so as to process, analyze, and generate human-like text based on given input. Any of the AI models may have any typical architecture for LLMs, including one or more architectures as seen in Bidirectional Encoder Representations from Transformers (BERT), Generative Pre-trained Transformer series (Chat GPT series LLMs), or leverage a combination of transformer architecture with pre-trained data to create coherent and contextually relevant text.

The AI models can be trained using training data. In embodiments, system 100 can include a training set generator that is capable of generating training data (e.g., a set of training inputs and a set of target outputs) to train the AI models. Training data can be associated with training an AI model to generate a response to a user query based on any combination of metadata, question language, the subtitle text corresponding to a video, and/or external information (not shown in FIG. 1). In embodiments, the user query may be formed in natural language.

The training set generator can accept responses as training input data to generate a training corpus for the AI model(s). The training set generator (or another component of system 100) can store the generated corpus of training data at datastore 118. In some implementations, the training set generator can generate training data that can be used to refine an already trained model. In some implementations, the training set generator can generate training data that can be used to train an LLM. In some implementations, training input data can be populated with historical variations of data. In some implementations, the training set generator can attach various training labels to training input data used to generate training data.

In some implementations, model training can be supervised, and each set of training data can include a subset of training inputs and target outputs based on the identified data. To train a supervised model, the training set generator can generate training data including a subset of training inputs and a subset of target outputs. The subset of training inputs can include questions, and a subset of target outputs can include responses (which in some cases may be textual responses). In some implementations, a subset of training inputs can include responses and a subset of target outputs can include a question. In some implementations, the training set generator can include an LLM that accepts responses and generates similar descriptions based on the input of the responses for a particular question. In some implementations, model training can be unsupervised. To train an unsupervised model, the training set generator can generate training data by clustering groups of historical responses (e.g., included in datastore 118) based on similarities between the historical responses, through dimensionality reduction by reducing the number of features in the data while retaining as much relevant information about the historical responses as possible, by generating synthetic or partially synthetic data that resembles the original data, through anomaly detection by identifying parts of content items that are significantly different from the rest of the data, or through data augmentation by applying mathematical transformations to the training dataset.

In some embodiments, system 100 can include a training engine (e.g., machine learning model training engine 112). The training engine can train an AI model using the training data from the training set generator. In some implementations, the AI model(s) can refer to the model artifact that is created by the training engine using the training data that includes training inputs and corresponding target outputs (correct answers for respective training inputs). The training engine can find patterns in the training data that map the training input to the target output (the answer to be predicted), identify clusters of data that correspond to the identified patterns, and provide the AI model(s) that captures these patterns. For example, the AI model(s) can be trained by adjusting weights of a neural network in accordance with a backpropagation learning algorithm or the like. The AI model(s) can use one or more of support vector machine (SVM), Radial Basis Function (RBF), clustering, supervised machine learning, semi-supervised machine learning, unsupervised machine learning, k-nearest neighbor algorithm (k-NN), linear regression, random forest, neural network (e.g., artificial neural network), a boosted decision forest, etc.

In some implementations, the training engine can train the AI models using a generative adversarial network (GAN). A GAN can consist of two neural networks, where one neural network is a generative AI model, and the other neural network is a discriminative AI model. GAN can cause each of the two neural networks to engage in a competitive process against the other neural network. The generative AI model can attempt to synthesize data that is indistinguishable from collected data (e.g., input data to the generative AI model), and the discriminative AI model can attempt to differentiate between collected data and synthesized data. GAN training can iteratively refine the output of the generative AI model to align to the collected dataset more closely. In some implementations, the training engine can train the AI models using a variational autoencoder (VAE), which can introduce probabilistic encoding to represent input data. The probabilistic encoding can be processed through one or more layers and then decoded to reconstruct a generative output. In this way, VAE can be used to train the AI models to learn latent configurable representations of data (e.g., the probabilistic encoding through various layers). Output from the AI models trained using VAE can be continuously reconfigured based on the latent configurable representations of data.

More specifically, in some embodiments, machine learning model training engine 112 can train and/or retrain one or more machine learning models of machine learning model(s) 106 based on previously unrecognized content (e.g., from unrecognized content detection subsystem 110). The one or more machine learning models of machine learning model(s) 106 can be trained and/or retrained to recognize references to the previously unrecognized content in the audio data of the virtual meeting and then generate a textual representation of the previously unrecognized content.

For example, training data can be generated based on the previously unrecognized content, where one or more possible pronunciations (e.g., from pronunciation generation subsystem 114) can be used as the input data and the previously unrecognized content can be used as the target output data. In some embodiments, the one or more possible pronunciations are converted to a latent space (e.g., embedding space, vector space, etc.) of the machine learning model and the converted representations of the possible pronunciations are used as the training input data.

In some embodiments, speech recognition subsystem 104 has an associated lexicon and/or vocabulary of words that can be recognized by speech recognition subsystem 104. To modify speech recognition subsystem 104 to recognize the previously unrecognized content, the previously unrecognized content can be added to the lexicon and/or vocabulary.

Virtual meeting system 102 can search (e.g., parse, read, analyze, scan, etc.) one or more content items associated with a virtual meeting to find previously unrecognized content to be used to modify speech recognition subsystem 104. The searched content items can include names of participants of the virtual meeting (e.g., from a meeting invitation, provided by the participant as they join the meeting, etc.) and/or documents associated with the virtual meeting (e.g., documents attached to a meeting invitation).

In some embodiments, the content items associated with the virtual meeting can include text extracted from content shared during the virtual meeting. For example, a participant can share a presentation during the virtual meeting (e.g., can share their device screen where they have a presentation open during a video conference meeting). Virtual meeting system 102 can extract text from the images shared by the participant (e.g., frames of the presentation, frames of the participant's device screen, etc.), for example, using optical character recognition (OCR) software (e.g., via optical character recognition subsystem 108).

In some embodiments, the content items associated with the virtual meeting can include text exchanged between one or more participants of the virtual meeting (e.g., in-meeting chat messages).

In some embodiments, the content items associated with the virtual meeting can include text extracted from one or more documents associated with an organization of a participant of the virtual meeting. For example, during a team virtual meeting (e.g., audio call, video call, etc.), a speech recognition system can be used that has previously been modified to recognize and correctly transcribe speech audio related to content found in documents of the organization (e.g., company-specific jargon). The modified speech recognition system can be used during multiple virtual meetings of the organization to increase the quality of all text generated from speech audio related to those meetings.

As mentioned above, optical character recognition subsystem 108 can extract text from images shared during a virtual meeting and add the extracted text to the content items virtual meeting system 102 searches for previously unrecognized content. In some embodiments, optical character recognition subsystem 108 can include one or more machine learning models trained to convert images to text. In some embodiments, optical character recognition subsystem 108 can include other software configured to recognize text in an image and extract that text from the image. For example, optical character recognition subsystem 108 can be configured to extract text from images of handwritten notes (e.g., on a whiteboard, on paper, etc.), digital copies of documents (e.g., a scanned image of a physical document), screenshots from a device of a user, and/or the like.

Unrecognized content detection subsystem 110 can be configured to evaluate the content items found by virtual meeting system 102 and select one or more content items that have not previously been recognized by speech recognition subsystem 104 (e.g., previously unrecognized content). In some embodiments, unrecognized content detection subsystem 110 compares the text associated with a content item against the lexicon and/or vocabulary of speech recognition subsystem 104 to determine if speech recognition subsystem 104 can recognize speech audio corresponding to the text. In some embodiments, unrecognized content detection subsystem 110 provides the text associated with a content item to one or more machine learning models to determine if speech recognition subsystem 104 can recognize speech audio corresponding to the text. In some embodiments, unrecognized content detection subsystem 110 can evaluate each content item found by virtual meeting system 102 and determine whether it should be included in the set of previously unrecognized content or not.

In some embodiments, unrecognized content detection subsystem 110 can add metadata to a previously unrecognized content item to aid in speech recognition of the previously unrecognized content item. For example, unrecognized content detection subsystem 110 can include information related to how the previously unrecognized content item was used in the content (e.g., part of speech, etc.). Speech recognition subsystem 104 can use the metadata during text generation to provide a more accurate textual representation of the audio. For example, if the context where a previously unrecognized content item was used suggests that the previously unrecognized content item is a noun (e.g., a product name, etc.), speech recognition subsystem 104 can avoid generating text associated with the previously unrecognized content item when a verb, adjective, adverb, etc. is expected in the generated text.

Pronunciation generation subsystem 114 can receive the previously unrecognized content from unrecognized content detection subsystem 110 and generate one or more possible pronunciations for the content. In some embodiments, pronunciation generation subsystem 114 can split the previously unrecognized content into one or more graphemes (e.g., orthographic symbols), and then combine corresponding phonemes (e.g., units of the sound system of a language) to generate one or more possible pronunciations for the previously unrecognized content. In some embodiments, pronunciation generation subsystem 114 can include one or more machine learning models trained to perform grapheme-to-phoneme (G2P) conversion tasks.

The possible pronunciations generated by pronunciation generation subsystem 114 can be used to modify speech recognition subsystem 104. For example, as described above, the possible pronunciations can be used to create training data that can be used to train a new machine learning model or to retrain an existing machine learning model.

Virtual meeting system 102 can be connected to datastore 118 via network 116. Datastore 118 can be a persistent storage that is capable of storing content items, machine learning models, previously unrecognized content, possible pronunciations, training data, and/or the like. Datastore 118 may be hosted by one or more storage devices, such as main memory, magnetic or optical storage-based disks, tapes or hard drives, network attached storage (NAS), storage area network (SAN), and so forth. In some embodiments, datastore 118 may be a network-attached file server. In some embodiments, datastore 118 may be some other type of persistent storage such as an object-oriented database, a relational database, and so forth. In some embodiments, datastore 118 may be hosted on or may be a component of virtual meeting system 102. In some embodiments, datastore 118 may be provided by a third-party service such as a cloud platform provider.

System 100 can include one or more virtual meeting participant devices (e.g., virtual meeting participant device 120, virtual meeting participant device 122, etc.). Each virtual meeting participant device can correspond to a user and can enable the user to connect to and interface with virtual meeting system 102. Each virtual meeting participant device can include an audiovisual component that can generate audio and video data to be streamed to the virtual meeting system 102. The audiovisual component can include a device (e.g., a microphone) to capture an audio signal representing speech of a user and generate audio data (e.g., an audio file or audio stream) based on the captured audio signal. The audiovisual component can include another device (e.g., a speaker) to output audio data to a user associated with a virtual meeting participant device. In some implementations, the audiovisual component includes an image capture device (e.g., a camera) to capture images and generate video data (e.g., a video stream) of the captured images.

In some embodiments, at least one of the virtual meeting participant devices is associated with a physical conference or meeting room and can include or be coupled to a media system that can include one or more display devices, one or more speakers, and one or more cameras. The display device can be, for example, a smart display or a non-smart display (e.g., a display that is not itself configured to connect to the network). Users that are physically present in the room can use the media system rather than their own devices (e.g., one or more of devices 120 and 122) to participate in the virtual meeting, which can include other remote users. For example, the users in the room that participate in the virtual meeting can control the display device to show a slide presentation or watch slide presentations of other participants. Sound and/or camera control can similarly be performed. The virtual meeting participant devices associated with a physical conference or meeting room can generate audio and video data to be streamed to the virtual meeting system 102 (e.g., using one or more microphones, speakers, and cameras).

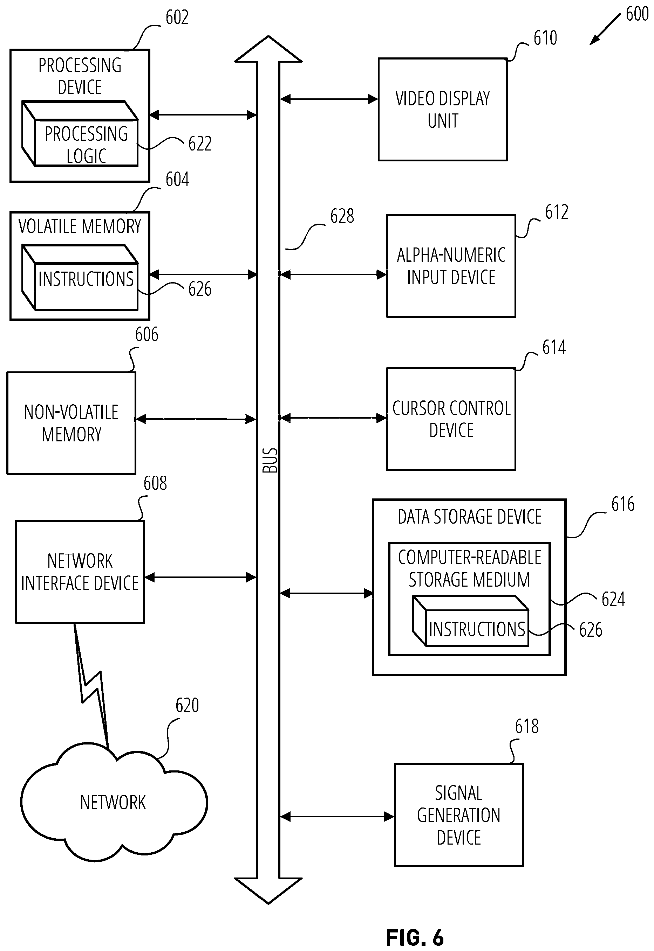

In some embodiments, virtual meeting participant device 120 and/or virtual meeting participant device 122 can include one or more processing devices, volatile and non-volatile memory, data storage, one or more input/output peripherals such as network interfaces. FIG. 6 illustrates an example architecture of computing devices. In some embodiments, virtual meeting participant device 120 and/or virtual meeting participant device 122 may be singular devices such as smartphones, tablets, laptops, desktops, workstations, edge devices, embedded devices, servers, network appliances, security appliances, etc. In some embodiments, virtual meeting participant device 120 and/or virtual meeting participant device 122 comprise multiple devices of similar or varying architecture such as computing clusters, data centers, co-located servers, enterprise networks, geographically disparate devices connected via virtual private networks (VPNs), etc. In some embodiments, virtual meeting participant device 120 and/or virtual meeting participant device 122 comprise hardware devices such as those just described, virtual resources such as virtual machines (VMs) and containerized applications, or a combination of hardware and virtual resources.

In some embodiments, virtual meeting participant device 120 and/or virtual meeting participant device 122 can share local content (e.g., content local to the respective device) during a virtual meeting facilitated by virtual meeting system 102. In some embodiments, virtual meeting system 102 can extract text from the shared content and use the extracted text to modify speech recognition subsystem 104 to perform contextual speech recognition for the virtual meeting.

In implementations of the disclosure, a "user" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether virtual meeting system 102, speech recognition subsystem 104, optical character recognition subsystem 108, and/or unrecognized content detection subsystem 110 collect user information (e.g., information about a user's social network, social actions or activities, profession, a user's preferences, or a user's current location), or to control whether and/or how to receive content from virtual meeting system 102 and/or speech recognition subsystem 104 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by virtual meeting system 102, speech recognition subsystem 104, optical character recognition subsystem 108, and/or unrecognized content detection subsystem 110.

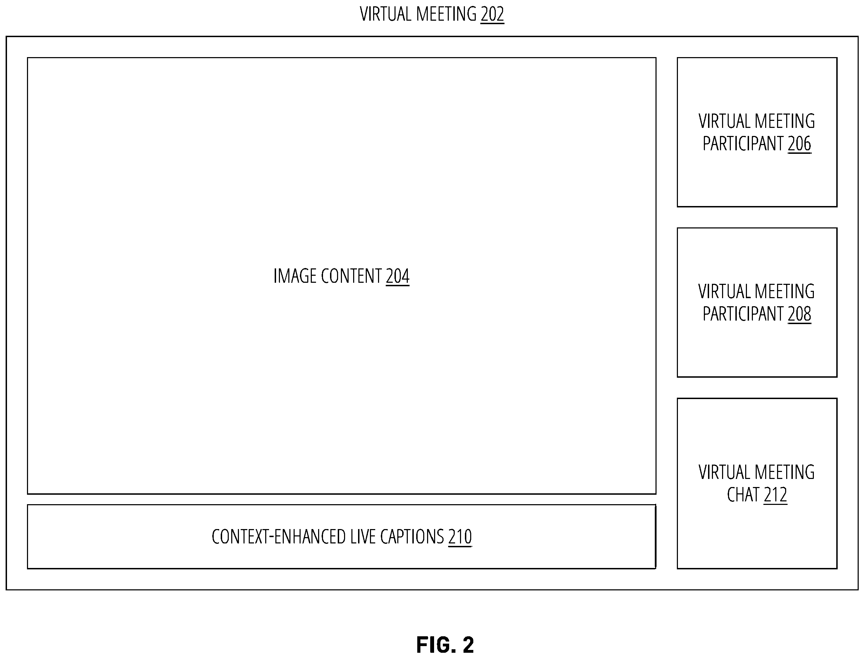

FIG. 2 depicts an example virtual meeting 202, in accordance with at least one embodiment. Virtual meeting 202 can include image content 204, one or more virtual meeting participants (e.g., virtual meeting participant 206, virtual meeting participant 208, etc.), context-enhanced live captions 210, and virtual meeting chat 212. In some embodiments, virtual meeting 202 can be facilitated by virtual meeting system 102 of FIG. 1.

One or more participants (e.g., virtual meeting participant 206 and virtual meeting participant 208) can communicate within virtual meeting 202. The communication can be audio, video, text (e.g., virtual meeting chat 212), and/or a combination thereof. For example, a video recorded by a camera of virtual meeting participant 206 can be included in virtual meeting 202 so virtual meeting participant 208 can see virtual meeting participant 206, and vice versa.

Context-enhanced live captions 210 can be generated during virtual meeting 202 and can be made visible to the virtual meeting participants. In some embodiments, context-enhanced live captions 210 can be generated by speech recognition subsystem 104 of FIG. 1. Context-enhanced live captions 210 can include a textual representation of the speech audio of virtual meeting 202. The speech recognition system (e.g., speech recognition subsystem 104 of FIG. 1) generating context-enhanced live captions 210 can be modified before and/or during virtual meeting 202 based on content associated with virtual meeting 202 to improve the accuracy of context-enhanced live captions 210. In some embodiments, the speech recognition system can be modified after virtual meeting 202 to improve the accuracy of a transcript and/or AI-generated summary generated based on audio data of virtual meeting 202.

In some embodiments, one or more participants can share content from their device within virtual meeting 202. Image content 204 can include the content shared by a participant during the virtual meeting. For example, virtual meeting participant 206 can share content from their device, and a graphic representation of that content can be shared in virtual meeting 202 with the other participants. In some embodiments, text can be extracted from image content 204, and the text can be used to provide additional context to (e.g., to modify) the speech recognition system (e.g., speech recognition subsystem 104 of FIG. 1) that is being used to generate context-enhanced live captions 210.

In some embodiments, one or more participants can communicate using text within virtual meeting 202 via virtual meeting chat 212. The text exchanged between participants can be added to the content items that are evaluated to determine whether they are previously unrecognized content items. For example, participants may send text messages via virtual meeting chat 212 that include the name of a company product. The name of the company product can be identified as "previously unrecognized content" and can be used to modify the speech recognition system. Then, when the name of the company product is spoken by a participant in virtual meeting 202, the speech recognition system can accurately generate text based on the spoken name of the company product.

In some embodiments, if a participant shares a document via virtual meeting chat 212 (e.g., by sending a link to a shared document, by attaching a file to the text message, etc.), the virtual meeting system can parse the contents of the shared document to find previously unrecognized content that can be used to modify the speech recognition system.

In some embodiments, the speech recognition system used to generate context-enhanced live captions 210 of virtual meeting 202 can have been modified during a previous virtual meeting. For example, a speech recognition system can be modified based on context of a first virtual meeting (e.g., a first virtual meeting within an organization). The modified speech recognition system can be used during a second virtual meeting (e.g., a second virtual meeting within the same organization). The modified speech recognition system can be further modified during the second virtual meeting. The speech recognition system can detect and correctly transcribe (e.g., convert from audio to text) content items that were first detected as previously unrecognized content items in relation to the first virtual meeting.

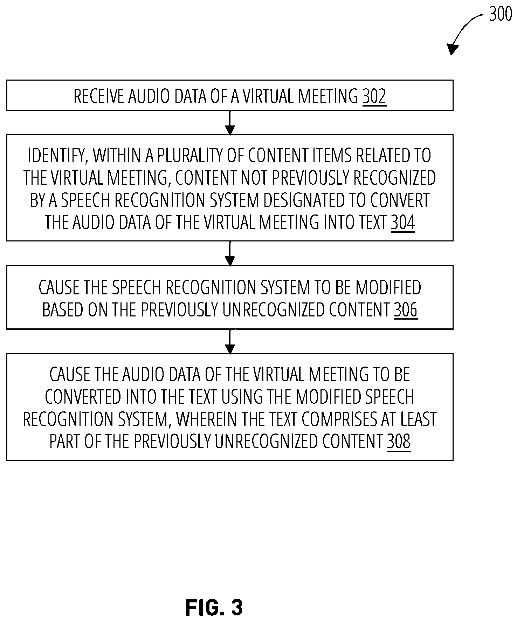

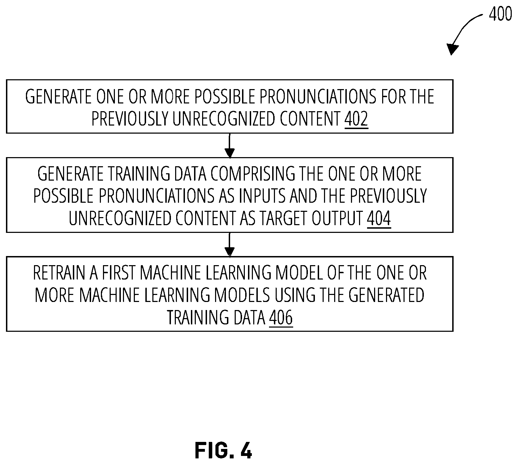

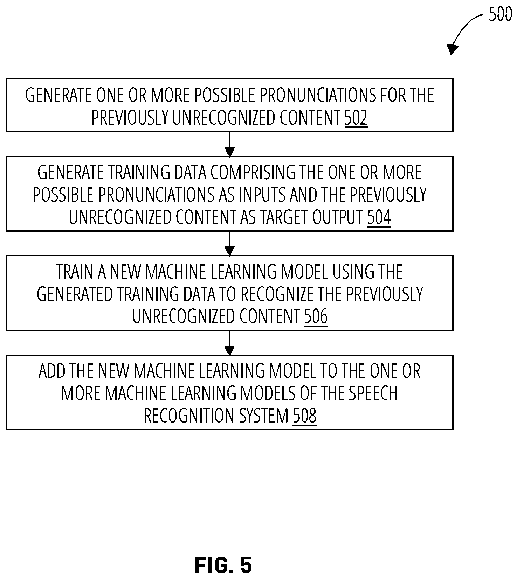

FIG. 3 depicts a flow diagram of an example method for contextual speech recognition of virtual meetings, in accordance with at least one embodiment. FIG. 4 depicts a flow diagram for modifying a speech recognition system used for contextual speech recognition of virtual meetings, in accordance with at least one embodiment. FIG. 5 depicts a flow diagram for modifying a speech recognition system used for contextual speech recognition of virtual meetings, in accordance with at least one embodiment. Method 300, method 400, and/or method 500 can be performed by processing logic that can include hardware (circuitry, dedicated logic, etc.), software (e.g., instructions run on a processing device), or a combination thereof. In at least one implementation, some or all of the operations of method 300, method 400, and/or method 500 can be performed by one or more components of system 100 for contextual speech recognition of virtual meetings of FIG. 1. For example, in some embodiments, method 300 can be performed by virtual meeting system 102 of FIG. 1. In some embodiments, method 400 and/or method 500 can be performed by machine learning model training engine 112 and/or pronunciation generation subsystem 114 of FIG. 1.

For simplicity of explanation, the methods of this disclosure are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states e.g., via a state diagram. Additionally, it should be appreciated that the methods disclosed in this specification are capable of being stored on an article of manufacture to facilitate transporting and transferring such methods to computing devices. The term "article of manufacture," as used herein, is intended to encompass a computer program accessible from any computer-readable device or storage media.

Referring to FIG. 3, at block 302, processing logic can receive audio data of a virtual meeting. The virtual meeting can be an audio-only meeting, a video meeting, or the like. At block 304, processing logic can identify, within a plurality of content items related to the virtual meeting, content not previously recognized by a speech recognition system designated to convert the audio data of the virtual meeting into text. The plurality of content items related to the virtual meeting can include text extracted from one or more sources. For example, processing logic can search (e.g., parse, read, analyze, scan, etc.) one or more content items associated with a virtual meeting. The searched content items can include names of participants of the virtual meeting (e.g., from a meeting invitation, provided by the participant as they join the meeting, etc.) and/or documents associated with the virtual meeting (e.g., documents attached to a meeting invitation).

In some embodiments, the plurality of content items related to the virtual meeting can include text extracted from content shared during the virtual meeting. For example, a participant can share a presentation during the virtual meeting (e.g., can share their device screen where they have a presentation open during a video conference meeting). Processing logic can extract text from the images shared by the participant (e.g., frames of the presentation, frames of the participant's device screen, etc.) for example, using optical character recognition (OCR) software. The extracted text can be added to the plurality of content items related to the virtual meeting.

In some embodiments, the OCR software can include one or more machine learning models trained to convert images to text. In some embodiments, the OCR software can include other software configured to recognize text in an image and extract that text from the image. For example, the OCR software can be configured to extract text from images of handwritten notes (e.g., on a whiteboard, on paper, etc.), digital copies of documents (e.g., a scanned image of a physical document), screenshots from a device of a user, and/or the like.

In some embodiments, the plurality of content items related to the virtual meeting can include text exchanged between one or more participants of the virtual meeting (e.g., in-meeting chat messages).

In some embodiments, the plurality of content items related to the virtual meeting can include text extracted from one or more documents associated with an organization of a participant of the virtual meeting. For example, processing logic can search (e.g., parse, read, analyze, scan, etc.) a collection of documents of an organization to find previously unrecognized content (e.g., company-specific jargon) that may be discussed during a team virtual meeting.

In some embodiments, to identify content not previously recognized by the speech recognition system designated to convert the audio data of the virtual meeting into text, text of one or more content items of the plurality of content items can be compared against a lexicon and/or vocabulary of the speech recognition system to determine if the speech recognition system can recognize speech audio corresponding to the text. In some embodiments, the text associated with a content item can be provided to one or more machine learning models to determine if the speech recognition system can recognize speech audio corresponding to the text.

If the text of the content item is not in the lexicon and/or vocabulary of the speech recognition system and/or if the one or more machine learning models determines that the speech recognition system cannot recognize speech audio corresponding to the text, the content item and/or the text of the content item can be identified as previously unrecognized content.

At block 306, processing logic can cause the speech recognition system to be modified based on the previously unrecognized content. In some embodiments, causing the speech recognition system to be modified based on the previously unrecognized content includes generating one or more possible pronunciations for the previously unrecognized content and adding the possible pronunciations to a lexicon of the speech recognition system. In some embodiments, the unrecognized content can be added to the lexicon of the speech recognition system. In some embodiments, causing the speech recognition to be modified based on the previously unrecognized content includes providing a representation of the previously unrecognized content as input to a machine learning model of the speech recognition system. In some embodiments, causing the speech recognition system to be modified based on the previously unrecognized content includes performing one or more steps of method 400 and/or method 500, as discussed below.

At block 308, processing logic can cause the audio data of the virtual meeting to be converted into the text using the modified speech recognition system, wherein the text comprises at least part of the previously unrecognized content. In some embodiments, the text can be live captions visible during the virtual meeting, a transcription of the virtual meeting, or a summary of the virtual meeting generated using one or more machine learning models.

Referring to FIG. 4, at block 402, to cause the speech recognition system to be modified based on the previously unrecognized content, processing logic can generate one or more possible pronunciations for the previously unrecognized content. At block 404, processing logic can generate training data comprising the one or more possible pronunciations as inputs and the previously unrecognized content as target output. At block 406, processing logic can retrain a first machine learning model of the one or more machine learning models using the generated training data. For example, machine learning model training engine 112 of FIG. 1 can use the training data based on the previously unrecognized content to retrain at least one of machine learning model(s) 106 of speech recognition subsystem 104 of FIG. 1.

Referring to FIG. 5, at block 502, to cause the speech recognition system to be modified based on the previously unrecognized content, processing logic can generate one or more possible pronunciations for the previously unrecognized content. At block 504, processing logic can generate training data comprising the one or more possible pronunciations as inputs and the previously unrecognized content as target output. At block 506, processing logic can train a new machine learning model using the generated training data to recognize the previously unrecognized content. In some embodiments, the new machine learning model is trained to recognize a representation of the previously unrecognized content. For example, the machine learning model may be trained to recognize a representation of a pronunciation of the previously unrecognized content. In some embodiments, the representation includes a vector-space (e.g., a latent-space, an embedding space) representation of a possible pronunciation of the previously unrecognized content. At block 508, processing logic can add the new machine learning model to the one or more machine learning models of the speech recognition system. For example, machine learning model training engine 112 of FIG. 1 can use the training data based on the previously unrecognized content to train a new machine learning model, which can be added to machine learning model(s) 106 of speech recognition subsystem 104 of FIG. 1.

FIG. 6 is a block diagram illustrating an exemplary computer system, in accordance with at least one embodiment of the present disclosure. The computer system 600 can correspond to virtual meeting system 102, described with respect to FIG. 1. The computer system 600 can also correspond to virtual meeting participant device 120 and/or virtual meeting participant device 122, described with respect to FIG. 1. Computer system 600 can operate in the capacity of a server or an endpoint machine in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processing device (processor) 602, a main memory 604 (e.g., read-only memory (ROM), flash memory, dynamic random access memory (DRAM) such as synchronous DRAM (SDRAM), double data rate (DDR SDRAM), or DRAM (RDRAM), etc.), a static memory 606 (e.g., flash memory, static random access memory (SRAM), etc.), and a data storage device 616, which communicate with each other via a bus 628.

Processor (processing device) 602 represents one or more general-purpose processing devices such as a microprocessor, central processing unit, or the like, and may include processing logic 622. More particularly, the processor 602 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 602 can also be one or more special-purpose processing devices such as an application specific integrated circuit (ASIC), a field programmable gate array (FPGA), a digital signal processor (DSP), network processor, or the like. The processor 602 is configured to execute instructions 626 (e.g., for generating threat indicator alerts) for performing the operations discussed herein.

The computer system 600 can further include a network interface device 608. The computer system 600 also can include a video display unit 610 (e.g., a liquid crystal display (LCD) or a cathode ray tube (CRT)), an input device 612 (e.g., a keyboard, and alphanumeric keyboard, a motion sensing input device, touch screen), a cursor control device 614 (e.g., a mouse), and a signal generation device 618 (e.g., a speaker). In some embodiments, computer system 600 may not include video display unit 610, input device 612, and/or cursor control device 614 (e.g., in a headless configuration).

The data storage device 616 can include a non-transitory machine-readable storage medium 624 (also computer-readable storage medium) on which is stored one or more sets of instructions 626 (e.g., for contextual speech recognition of virtual meetings) embodying any one or more of the methodologies or functions described herein. The instructions 626 can also reside, completely or at least partially, within the main memory 604 and/or within the processor 602 during execution thereof by the computer system 600, the main memory 604 and the processor 602 also constituting machine-readable storage media. The instructions can further be transmitted or received over a network 620 via the network interface device 608.

In one implementation, the instructions 626 include instructions for contextual speech recognition of virtual meetings. While the computer-readable storage medium 624 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," "one embodiment," "an implementation," or "an embodiment," means that a particular feature, structure, or characteristic described in connection with the implementation and/or embodiment is included in at least one implementation and/or embodiment. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interaction between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collected data is anonymized prior to performing any analysis to obtain any statistical patterns so that the identity of the user cannot be determined from the collected data.

The specification includes the following subject-matter expressed in the form of clauses 1-22:
1. A method comprising:
   receiving audio data of a virtual meeting;
   identifying, within a plurality of content items related to the virtual meeting, content not previously recognized by a speech recognition system designated to convert the audio data of the virtual meeting into text;
   causing the speech recognition system to be modified based on the previously unrecognized content; and
   causing the audio data of the virtual meeting to be converted into the text using the modified speech recognition system, wherein the text comprises at least part of the previously unrecognized content.
2. The method of clause 1, wherein the plurality of content items comprises at least one of:
   names of participants of the virtual meeting;
   documents related to the virtual meeting;
   text shared between participants of the virtual meeting; or
   documents associated with an organization of a participant of the virtual meeting.
3. The method of clause 1 or clause 2, wherein an image is shared during the virtual meeting, and wherein the plurality of content items comprises text derived from processing the image using optical character recognition.
4. The method of any of clauses 1-3, wherein causing the speech recognition system to be modified based on the previously unrecognized content comprises:
   generating one or more possible pronunciations for the previously unrecognized content; and
   adding the one or more possible pronunciations to a lexicon of the speech recognition system.
5. The method of any of clauses 1-4, wherein the speech recognition system comprises one or more machine learning models trained to convert speech data to corresponding text data.
6. The method of clause 5, wherein causing the speech recognition system to be modified based on the previously unrecognized content comprises:
   generating one or more possible pronunciations for the previously unrecognized content;
   generating training data comprising the one or more possible pronunciations as inputs and the previously unrecognized content as target output; and
   retraining a first machine learning model of the one or more machine learning models using the generated training data.
7. The method of clause 5, wherein causing the speech recognition system to be modified based on the previously unrecognized content comprises:
   generating one or more possible pronunciations for the previously unrecognized content;
   generating training data comprising the one or more possible pronunciations as inputs and the previously unrecognized content as target output;
   training a new machine learning model using the generated training data to recognize the previously unrecognized content; and
   adding the new machine learning model to the one or more machine learning models of the speech recognition system.
8. The method of clause 5, wherein causing the speech recognition system to be modified based on the previously unrecognized content comprises providing a representation of the previously unrecognized content to at least a first machine learning model of the one or more machine learning models.
9. The method of any of clauses 1-8, wherein the text from causing the audio data of the virtual meeting to be converted using the modified speech recognition system is at least one of:
   live captions visible during the virtual meeting;
   a transcription of the virtual meeting; or
   a summary of the virtual meeting generated using one or more machine learning models.
10. A system comprising:
   a memory device; and
   a processing device coupled to the memory device, the processing device to perform operations comprising:
      receiving audio data of a virtual meeting;
      identifying, within a plurality of content items related to the virtual meeting, content not previously recognized by a speech recognition system designated to convert the audio data of the virtual meeting into text;
      causing the speech recognition system to be modified based on the previously unrecognized content; and
      causing the audio data of the virtual meeting to be converted into the text using the modified speech recognition system, wherein the text comprises at least part of the previously unrecognized content.
11. The system of clause 10, wherein the plurality of content items comprises at least one of:
   names of participants of the virtual meeting;
   documents related to the virtual meeting;
   text shared between participants of the virtual meeting; or
   documents associated with an organization of a participant of the virtual meeting.
12. The system of clause 10 or clause 11, wherein an image is shared during the virtual meeting, and wherein the plurality of content items comprises text derived from processing the image using optical character recognition.
13. The system of any of clauses 10-12, wherein causing the speech recognition system to be modified based on the previously unrecognized content comprises:
   generating one or more possible pronunciations for the previously unrecognized content; and
   adding the one or more possible pronunciations to a lexicon of the speech recognition system.
14. The system of any of clauses 10-13, wherein the speech recognition system comprises one or more machine learning models trained to convert speech data to corresponding text data.
15. The system of clause 14, wherein causing the speech recognition system to be modified based on the previously unrecognized content comprises:
   generating one or more possible pronunciations for the previously unrecognized content;
   generating training data comprising the one or more possible pronunciations as inputs and the previously unrecognized content as target output; and
   retraining a first machine learning model of the one or more machine learning models using the generated training data.
16. The system of clause 14, wherein causing the speech recognition system to be modified based on the previously unrecognized content comprises:
   generating one or more possible pronunciations for the previously unrecognized content;
   generating training data comprising the one or more possible pronunciations as inputs and the previously unrecognized content as target output;
   training a new machine learning model using the generated training data to recognize the previously unrecognized content; and
   adding the new machine learning model to the one or more machine learning models of the speech recognition system.
17. The system of clause 14, wherein causing the speech recognition system to be modified based on the previously unrecognized content comprises providing a representation of the previously unrecognized content to at least a first machine learning model of the one or more machine learning models.
18. The system of any of clauses 10-17, wherein the text generated based on the audio data of the virtual meeting using the modified speech recognition system is at least one of:
   live captions visible during the virtual meeting;
   a transcription of the virtual meeting; or
   a summary of the virtual meeting generated using one or more machine learning models.
19. A non-transitory computer-readable storage medium comprising instructions that, when executed by a processing device, cause the processing device to perform operations comprising:
   receiving audio data of a virtual meeting;
   identifying, within a plurality of content items related to the virtual meeting, content not previously recognized by a speech recognition system designated to convert the audio data of the virtual meeting into text;
   causing the speech recognition system to be modified based on the previously unrecognized content; and
   causing the audio data of the virtual meeting to be converted into the text using the modified speech recognition system, wherein the text comprises at least part of the previously unrecognized content.
20. The non-transitory computer-readable storage medium of clause 19, wherein the plurality of content items comprises at least one of:
   names of participants of the virtual meeting;
   documents related to the virtual meeting;
   text shared between participants of the virtual meeting; or
   documents associated with an organization of a participant of the virtual meeting.
21. A computer program product comprising instructions which, when executed by one or more processors, cause the processors to perform the method of any of clauses 1-9.
22. Computer-executable instructions which, when executed by one or more processors, cause the processors to perform the method of any of clauses 1-9.

## Claims

1. A method comprising:
receiving audio data of a virtual meeting;
identifying, within a plurality of content items related to the virtual meeting, content not previously recognized by a speech recognition system designated to convert the audio data of the virtual meeting into text;
causing the speech recognition system to be modified based on the previously unrecognized content; and
causing the audio data of the virtual meeting to be converted into the text using the modified speech recognition system, wherein the text comprises at least part of the previously unrecognized content.

2. The method of claim 1, wherein the plurality of content items comprises at least one of:
names of participants of the virtual meeting;
documents related to the virtual meeting;
text shared between participants of the virtual meeting; or
documents associated with an organization of a participant of the virtual meeting;
and/or wherein an image is shared during the virtual meeting, and wherein the plurality of content items comprises text derived from processing the image using optical character recognition.

3. The method of claim 1 or claim 2, wherein causing the speech recognition system to be modified based on the previously unrecognized content comprises:
generating one or more possible pronunciations for the previously unrecognized content; and
adding the one or more possible pronunciations to a lexicon of the speech recognition system.

4. The method of any of claims 1-3, wherein the speech recognition system comprises one or more machine learning models trained to convert speech data to corresponding text data.

5. The method of claim 4, wherein causing the speech recognition system to be modified based on the previously unrecognized content comprises:
generating one or more possible pronunciations for the previously unrecognized content;
generating training data comprising the one or more possible pronunciations as inputs and the previously unrecognized content as target output; and
retraining a first machine learning model of the one or more machine learning models using the generated training data; or
wherein causing the speech recognition system to be modified based on the previously unrecognized content comprises:
generating one or more possible pronunciations for the previously unrecognized content;
generating training data comprising the one or more possible pronunciations as inputs and the previously unrecognized content as target output;
training a new machine learning model using the generated training data to recognize the previously unrecognized content; and
adding the new machine learning model to the one or more machine learning models of the speech recognition system; or
wherein causing the speech recognition system to be modified based on the previously unrecognized content comprises providing a representation of the previously unrecognized content to at least a first machine learning model of the one or more machine learning models.

6. The method of any of claims 1-5, wherein the text from causing the audio data of the virtual meeting to be converted using the modified speech recognition system is at least one of:
live captions visible during the virtual meeting;
a transcription of the virtual meeting; or
a summary of the virtual meeting generated using one or more machine learning models.

7. A system comprising:
a memory device; and
a processing device coupled to the memory device, the processing device to perform operations comprising:
receiving audio data of a virtual meeting;
identifying, within a plurality of content items related to the virtual meeting, content not previously recognized by a speech recognition system designated to convert the audio data of the virtual meeting into text;
causing the speech recognition system to be modified based on the previously unrecognized content; and
causing the audio data of the virtual meeting to be converted into the text using the modified speech recognition system, wherein the text comprises at least part of the previously unrecognized content.

8. The system of claim 7, wherein the plurality of content items comprises at least one of:
names of participants of the virtual meeting;
documents related to the virtual meeting;
text shared between participants of the virtual meeting; or
documents associated with an organization of a participant of the virtual meeting;
and/or wherein an image is shared during the virtual meeting, and wherein the plurality of content items comprises text derived from processing the image using optical character recognition.

9. The system of claim 7 or claim 8, wherein causing the speech recognition system to be modified based on the previously unrecognized content comprises:
generating one or more possible pronunciations for the previously unrecognized content; and
adding the one or more possible pronunciations to a lexicon of the speech recognition system.

10. The system of any of claims 7-9, wherein the speech recognition system comprises one or more machine learning models trained to convert speech data to corresponding text data.

11. The system of claim 10, wherein causing the speech recognition system to be modified based on the previously unrecognized content comprises:
generating one or more possible pronunciations for the previously unrecognized content;
generating training data comprising the one or more possible pronunciations as inputs and the previously unrecognized content as target output; and
retraining a first machine learning model of the one or more machine learning models using the generated training data; or
wherein causing the speech recognition system to be modified based on the previously unrecognized content comprises:
generating one or more possible pronunciations for the previously unrecognized content;
generating training data comprising the one or more possible pronunciations as inputs and the previously unrecognized content as target output;
training a new machine learning model using the generated training data to recognize the previously unrecognized content; and
adding the new machine learning model to the one or more machine learning models of the speech recognition system; or
wherein causing the speech recognition system to be modified based on the previously unrecognized content comprises providing a representation of the previously unrecognized content to at least a first machine learning model of the one or more machine learning models.

12. The system of any of claims 7-11**,** wherein the text generated based on the audio data of the virtual meeting using the modified speech recognition system is at least one of:
live captions visible during the virtual meeting;
a transcription of the virtual meeting; or
a summary of the virtual meeting generated using one or more machine learning models.

13. A non-transitory computer-readable storage medium comprising instructions that, when executed by a processing device, cause the processing device to perform operations comprising:
receiving audio data of a virtual meeting;
identifying, within a plurality of content items related to the virtual meeting, content not previously recognized by a speech recognition system designated to convert the audio data of the virtual meeting into text;
causing the speech recognition system to be modified based on the previously unrecognized content; and
causing the audio data of the virtual meeting to be converted into the text using the modified speech recognition system, wherein the text comprises at least part of the previously unrecognized content.

14. The non-transitory computer-readable storage medium of claim 13, wherein the plurality of content items comprises at least one of:
names of participants of the virtual meeting;
documents related to the virtual meeting;
text shared between participants of the virtual meeting; or
documents associated with an organization of a participant of the virtual meeting.

15. A computer program product comprising instructions which, when executed by one or more processors, cause the processors to perform the method of any of claims 1-6.
